# EUROPÄISCHE PATENTANMELDUNG

(11) **EP 1 813 840 A1**
(43) Veröffentlichungstag der Anmeldung: **01.08.2007**
(21) Anmeldenummer: 06001644.1
(22) Anmeldetag: 26.01.2006
(51) Int. Cl.: F16J 15/00, F16J 15/32

(54) **Mehrstufige Bürstendichtung**

(71) Anmelder: SIEMENS AKTIENGESELLSCHAFT, 80333 München (DE)
(72) Erfinder: Neef, Matthias Dr., 45468 Mülheim an der Ruhr (DE); Sürken, Norbert, 45468 Mülheim an der Ruhr (DE); Urlichs, Karl Dr., 90552 Röthenbach (DE)

(57) **Zusammenfassung**

Die Erfindung betrifft eine mehrstufige Bürstendichtung (1) einer Dampfturbine, wobei die Bürstendichtung (1) mehrere Bürsten (2a, ,2b, 2c) umfasst, die jeweils mehrere Borsten (3) aufweisen. Bisher werden mehrstufige Bürstendichtungen konservativ ausgelegt, weil eine genaue Vorhersage des Differenzdrucks über die einzelne Stufe nicht möglich ist. Die Erfindung hat es sich daher zur Aufgabe gemacht, eine Bürstendichtung zu schaffen, welche eine präzisere Vorhersage der Druckdifferenz über die einzelne Stufe bzw. Bürste ermöglicht und daher auch eine genauere Dimensionierung der Bürstendichtung unter Ausnutzung möglicher Einsparungen zulässt. Es wird vorgeschlagen, die nebeneinander angeordneten Bürsten (2a, ,2b, 2c) hinsichtlich verschiedener Parameter unterschiedlich auszubilden.

## Beschreibung

Die Erfindung betrifft eine mehrstufige Bürstendichtung einer Dampfturbine, wobei die Bürstendichtung mehrere Bürsten umfasst, die jeweils mehrere Borsten aufweisen.

Bürstendichtungen finden zur Abdichtung gegen den Austritt von Fluiden durch Spalte zwischen Rotoren und stehenden Bauteilen neben Labyrinthdichtungen ebenfalls häufige Anwendung. Bürstendichtungen sind hierbei besonders tolerant gegen ein Unterschreiten des Radialspiels zwischen dem drehenden Bauteil und dem stehenden Bauteil. Die Borsten der Bürste geben bei einem Unterschreiten des Radialspiels und einem Anstreifen der Dichtung an der sich drehenden Welle nach und es kommt zu einem Nachgeben der Borsten und zu einem zerstörungsfreien Verschleiß an den Borsten, wenn der Kontakt zwischen den stehenden Borsten und dem drehenden Bauteil längere Zeit andauert. Daneben ist eine Bürste gut geeignet, eine Druckdifferenz aufzunehmen und auf diese Weise die Lässigkeit der Dichtung effizient herabzusetzen. Für die Überwindung größerer Druckdifferenzen werden Bürstendichtungen- ebenso wie Labyrinthdichtungen - mehrstufig ausgebildet, so dass mehrere Büsten unter Zwischenanordnung von Freiräumen zwischen den Bürsten eine gewisse Druckdifferenz aufnehmen bis zur Entspannung auf den Umgebungsdruck. Die Strömungsrichtung im Sinne der Erfindung ist hierbei die Richtung des Druckabbaus von einem hohen Druckniveau auf ein niedriges Druckniveau, demzufolge die einzige Möglichkeit einer Fluidbewegung im Bereich der Bürstendichtung.

Eine Bürstendichtungsanordnung ist bereits aus der europäischen Patentschrift EP 1 271 021 B1 bekannt. Derartige herkömmliche Anordnungen haben den gravierenden Nachteil, dass in Folge nur schwer vorhersagbare Druckdifferenzen über die einzelnen Bürsten eine äußerst konservative Auslegung zu erfolgen hat und daher beispielsweise mehr Stufen bzw. Bürsten als notwendig vorzusehen sind, um den theoretischen Anforderungen zu genügen.

Die Erfindung hat es sich daher zur Aufgabe gemacht, eine Bürstendichtung zu schaffen, welche eine präzisere Vorhersage der Druckdifferenz über die einzelne Stufe bzw. Bürste ermöglicht und daher auch eine genauere Dimensionierung der Bürstendichtung unter Ausnutzung möglicher Einsparungen zulässt.

Zur Lösung wird vorgeschlagen, dass die in Strömungsrichtung hintereinander angeordneten Bürsten sich untereinander hinsichtlich der Länge der Borsten oder der Borstendicken oder der Borstensteifigkeiten oder des Legewinkels der Borsten oder der Höhe eines in Strömungsrichtung vor bzw. hinter der Bürstendichtung diese begrenzenden ersten Schutzrings oder eines Spalts zwischen den Borsten und einer gegenüberliegenden Fläche unterscheiden. Der definierte Unterschied zwischen den einzelnen Bürsten, beispielsweise hinsichtlich der Länge der Borsten, führt zu einer präziseren Vorhersagbarkeit der Verhältnisse des Druckabbaus über die einzelnen hintereinander angeordneten Bürsten. Auch ist das Abnutzungsverhalten bzw. der Verschleiß über die Betriebszeit und eine Vorhersage der dadurch eintretenden Leckage sehr viel genauer möglich. Auf diese Weise lässt sich auch die Lebensdauer der Bürsten besser optimieren.

Eine vorteilhafte Weiterbildung der Erfindung sieht vor, dass in Strömungsrichtung vorne angeordnete Bürsten eine größere Bauhöhe, dh. Borstenlänge und damit auch erhöhte Steifigkeit Länge der Borsten aufweisen als die dahinter angeordneten Bürsten. Auf diese Weise findet der maximale Druckabbau durch die in Strömungsrichtung ersten Stufe bzw. Bürste statt. Wichtig ist hierbei, dass es zu einem definierten Druckabbau über die einzelnen Bürsten kommt und auf diese Weise das Betriebsverhalten präziser vorhersagbar ist. Ein besonders idealer Verlauf des Druckabbaus ist hierbei gegeben, wenn identische Differenzdrücke an den einzelnen Bürsten der mehrstufigen Anordnung anliegen.

Sind die in Strömungsrichtung liegenden Bürsten vorne stärker belastet, so kann dem dadurch Rechnung getragen werden, dass die vorderen Stufen der Bürstendichtung eine höhere Borstenpaketdicke aufweisen als die nachfolgenden Stufen, d.h. die Borstenpaketdicke variiert in Strömungsrichtung.

Insbesondere mit der Längenstaffelung der Borsten über die verschiedenen Bürsten in Richtung der Strömung des Leckagefluids ist es zweckmäßig, wenn in Strömungsrichtung vorne angeordnete Bürsten dünnere Borsten aufweisen als dahinter angeordnete Bürsten. So ist es beispielsweise möglich, dass trotz der längeren Borsten ähnliche Steifigkeiten in den Bürsten erzielt werden und auf diese Weise sich die gewünschte Druckdifferenz ergibt. Im gleichen Sinne kann es vorteilhaft sein, wenn in Strömungsrichtung vorne angeordnete Bürsten eine geringere Steifigkeit der Borsten aufweisen als die dahinter angeordneten Bürsten. Die höhere Flexibilität der vorne liegenden Bürsten kann beispielsweise eine bessere Wirkung des "Blow-Down-Effekts" im Betrieb bewirken.

Insbesondere auf eine kontrollierte Variation des "Blow-Down-Effekts" zielt eine abnehmende Flachheit des Legewinkels in Strömungsrichtung über die verschiedenen Bürsten ab. Eine kontrollierte Variation dieses Parameters zwischen den einzelnen Bürsten führt zu einer Vorhersagbarkeit des Verhaltens der Bürste bei zunehmender Druckdifferenz.

Der Einfluss der Reibung zwischen den einzelnen Borsten der Bürste kann besser kontrolliert werden, wenn in Strömungsrichtung vor und hinter der Bürste vorgesehene Schutz- bzw Stützringe, die die Borsten einströmseitig schützen und abströmseitig stützen, gezielt in der Höhe variiert werden, so dass einige Bürsten der Anordnung flexibler auf Veränderungen der Strömungsbedingungen reagieren und andere in Folge verstärkter Reibung zwischen den Borsten starrer verbleiben. Bei der einzelnen Bürste kann der Schutzring mit geringerem Spalt zum Rotor ausgeführt werden als der Stützring, um den Blow-Down Effekt günstig zu beeinflussen.

Einen weiten Einfluss auf die Druckdifferenz der Bürste und die entsprechende Leckage hat die Ausgestaltung einer Kammer im Stützring der Bürste, bekannt als Druckentlastungszone. Diese ermöglicht insbesondere bei höheren Druckdifferenzen ein besseres Funktionieren des Blow-Down-Effektes. Damit spielt im vorhanden Beispiel die Ausgestaltung der Entlastungszone für die abströmseitigen Stufen der mehrstufigen Anordnung eine entscheidende Rolle, während die einströmseitigen Bürsten mit geringer oder fehlender Druckentlastung ausgestattet sein können.

Daneben kann es sinnvoll sein, wenn in Strömungsrichtung vorne angeordnete Bürsten einen geringeren Abstand der Borstenspitzen zu der gegenüberliegenden Rotorfläche aufweisen als dahinter angeordnete Bürsten bzw. einige Bürsten eine Länge der Borsten aufweisen, die zu einem stärkeren Anliegen der Borsten an gegenüberliegenden Fläche führt, als bei anderen Bürsten bzw. Borsten.

Eine weitere Möglichkeit, die Druckdifferenzen über die einzelnen Stufen bzw. Bürsten präziser vorherzusagen besteht darin, dass der axiale Abstand zwischen den Bürsten in Strömungsrichtung von Bürste zu Bürste zunimmt. Auf diese Weise können auch zwischen Bürsten sich in Umfangsrichtung erstreckende Dichtspitzen vorgesehen werden, so dass eine Kombination aus Labyrinthdichtung und Bürstendichtung entsteht und die Vorteile der Bürstendichtung hinsichtlich der Toleranz gegenüber dem Unterschreiten des Radialspiels erhalten bleiben.

In der Folge ist ein spezielles Ausführungsbeispiel unter Bezugnahme auf Zeichnungen zur Verdeutlichung beschrieben. Für den Fachmann ergeben sich neben dem Ausführungsbeispiel noch zahlreiche weitere Varianten der Erfindung. Es zeigt:
- Figur 1: ein Schnitt durch einen Rotor, einen Stator und eine erfindungsgemäße Bürstendichtung.
- Figur 2: ein axiale (in Strömungsrichtung) Sicht auf eine Bürstendichtung.

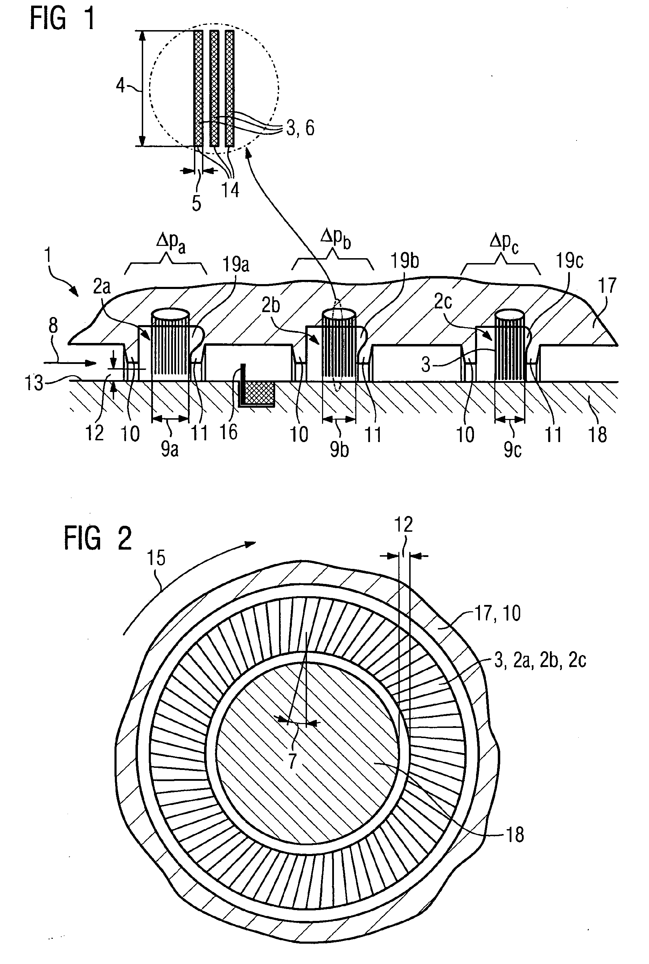

Figur 1 zeigt eine Bürstendichtung 1, welche einen Spalt 12 zwischen einem Rotor 18 und einem Stator 17 abdichtet. Die Bürsten 2a, 2b, 2c sind in einer Strömungsrichtung 8 hintereinander angeordnet. An den drei Bürsten 2a, 2b, 2c fallen jeweils unterschiedliche Differenzdrücke Δpa, Δpb, Δpc ab, wobei in Strömungsrichtung 8 die Druckdifferenz Δp an den Bürsten 2a, 2b, 2c ansteigt. Dieser Effekt wird dadurch erreicht, dass sich die Bürsten 2a, 2b, 2c hinsichtlich der Länge 4, ihrer Borsten, der Borstendicke 5, der Borstensteifigkeit 6, des Legewinkels 7, hinsichtlich des Spalts 12 zwischen der Borstenspitze 14 und der Fläche 13 und hinsichtlich des sich in Umfangsrichtung 15 ergebenden Legewinkels 7 unterscheiden. Die erste Bürste 2a weist die längsten Borsten 3 auf kombiniert mit der niedrigsten Borstensteifigkeit 6 und der geringsten Borstendicke 5.

Die Bürsten 2a, 2b, 2c weisen zueinander unterschiedliche Borstenpaketdicken 9a, 9b, 9c auf. Die Borstenpaketdicke 9a, 9b, 9c nimmt von Bürste 2a, 2b, 2c zu Bürste 2a, 2b, 2c in Strömungsrichtung ab.

Daneben weisen die Bürsten im Bereich ihrer Anbringung jeweils eine Druckentlastungszone (19a, 19b, 19c) auf. Die Druckentlastungszone (19a, 19b, 19c) variiert von Bürste 2a, 2b, 2c zu Bürste 2a, 2b, 2c in ihrer Größe derart, dass die in Strömungsrichtung erste Bürste 2a, 2b, 2c die größte Drückentlastungszone und die letzte Bürste 2a, 2b, 2c die kleinste Druckentlastungszone (19a, 19b, 19c) aufweisen.

Hier ist sowohl der erste Schutzring 10 als auch der zweite Schutzring 11 in der Höhe geringer ausgebildet als bei der nachfolgenden Bürste 2b oder der letzten Bürste 2c. Der Spalt 12 zwischen der gegenüberliegende Fläche 13 und den Borstenspitzen 14 hat die radial weiteste Ausdehnung verglichen mit den nachfolgenden Bürsten 2b und 2c.

### Bezugszeichenliste

- 1: Bürstendichtung
- 2a: Bürste
- 2b: Bürste
- 2c: Bürste
- 3: Borsten
- 4: Länge
- 5: Borstendicke
- 6: Borstensteifigkeit
- 7: Legewinkel
- 8: Strömungsrichtung
- 9: Borstenpaketdicke
- 10: erster Schutzring
- 11: zweiter Schutzring
- 12: Spalt
- 13: Fläche
- 14: Borstenspitze
- 15: Umfangsrichtung
- 16: Dichtspitze
- 17: Stator
- 18: Rotor
- 19a: Druckentlastungszone
- 19b: Druckentlastungszone
- 19c: Druckentlastungszone
- Δpa: Differenzdruck
- Δpb: Differenzdruck
- Δpc: Differenzdruck

## Patentansprüche

1. Mehrstufige Bürstendichtung (1) einer Dampfturbine, wobei die Bürstendichtung (1) mehrere
Bürsten (2a, ,2b, 2c) umfasst, die jeweils mehrere Borsten (3) aufweisen,
**dadurch gekennzeichnet, dass**
die nebeneinander angeordneten Bürsten (2a, ,2b, 2c) untereinander hinsichtlich
- der Länge (4) der Borsten (3) und/oder
- der Borstendicken (5) und/oder
- der Borstensteifigkeiten (6) und/oder
- der Borstenpaketdicke (9a, 9b, 9c) und/oder
- des Legewinkels (7) der Borsten (3) und/oder
- der Ausbildung der Druckausgleichszone zwischen den Bürsten (2a, 2b, 2c) und/oder
- der Höhe eines in Strömungsrichtung vor der Bürstendichtung (1) diese begrenzenden ersten Schutzrings (10) und/oder
- der Höhe eines in Strömungsrichtung nach der Bürstendichtung (1) diese begrenzenden zweiter Schutzrings (11) und/oder
- eines Spalts (12) zwischen den Borsten (3) und einer gegenüberliegenden Fläche (13) unterschiedlich ausgebildet sind.

2. Bürstendichtung (1) nach dem der vorhergehenden Anspruch,
**dadurch gekennzeichnet, dass**
in Strömungsrichtung (8) vorne angeordnete Bürsten (2a, ,2b, 2c) eine größere Länge (4) der Borsten (3) aufweisen als dahinter angeordnete Bürsten (2a, 2b, 2c).

3. Bürstendichtung (1) nach Anspruch 1 oder 2,
**dadurch gekennzeichnet, dass**
in Strömungsrichtung (8) vorne angeordnete Bürsten (2a, ,2b, 2c) dünnere Borsten (3) aufweisen als dahinter angeordnete Bürsten (2a, ,2b, 2c).

4. Bürstendichtung (1) nach einem der vorhergehenden Ansprüche,
**dadurch gekennzeichnet, dass**
in Strömungsrichtung (8) vorne angeordnete Bürsten (2a, ,2b, 2c) eine geringere Steifigkeit der Borsten (3) aufweisen als dahinter angeordnete Bürsten (2a, ,2b, 2c).

5. Bürstendichtung (1) nach einem der vorhergehenden Ansprüche,
**dadurch gekennzeichnet, dass**
in Strömungsrichtung (8) vorne angeordnete Bürsten (2a, ,2b, 2c) einen flacheren Legewinkel (7) der Borsten (3) aufweisen als dahinter angeordnete Bürsten (2a, ,2b, 2c).

6. Bürstendichtung (1) nach einem der vorhergehenden Ansprüche,
**dadurch gekennzeichnet, dass**
in Strömungsrichtung (8) vorne angeordnete Bürsten (2a, ,2b, 2c) eine geringere Höhe eines in Strömungsrichtung (8) vor den Borsten (3) der
Bürste (2a, ,2b, 2c) vorgesehenen Schutzrings aufweisen als dahinter angeordnete Bürsten (2a, 2b, 2c).

7. Bürstendichtung (1) nach einem der vorhergehenden Ansprüche,
**dadurch gekennzeichnet, dass**
in Strömungsrichtung (8) vorne angeordnete Bürsten (2a, ,2b, 2c) eine geringere Höhe eines in Strömungsrichtung (8) nach den Borsten (3) der Bürste (2a, ,2b, 2c) vorgesehenen Schutzrings (11) aufweisen als dahinter angeordnete Bürsten (2a, 2b, 2c).

8. Bürstendichtung (1) nach einem der vorhergehenden Ansprüche,
**dadurch gekennzeichnet, dass**
in Strömungsrichtung (8) vorne angeordnete Bürsten (2a, 2b, 2c) eine geringeren Abstand der Borstenspitzen (14) zu der gegenüberliegenden Fläche (13) aufweisen als dahinter angeordnete Bürsten (2a, 2b, 2c).

9. Bürstendichtung (1) nach einem der vorhergehenden Ansprüche,
**dadurch gekennzeichnet, dass**
der axiale Abstand zwischen den Bürsten (2a, ,2b, 2c) in Strömungsrichtung (8) von Bürste (2a, ,2b, 2c) zu Bürste (2a, ,2b, 2c) zunimmt.

10. Bürstendichtung (1) nach einem der vorhergehenden Ansprüche,
**dadurch gekennzeichnet, dass**
zwischen Bürsten (2a, ,2b, 2c) eine sich in Umfangsrichtung (15) erstreckende Dichtspitze (16) vorgesehen ist.
